# EUROPEAN PATENT APPLICATION

(11) **EP 3 424 695 A1**
(43) Date of publication of application: **09.01.2019**
(21) Application number: 17179937.2
(22) Date of filing: 06.07.2017
(51) Int. Cl.: B29D 35/12, B29D 35/14

(54) **METHOD FOR FORMING A POLYURETHANE FOAM COVERED WITH THERMOPLASTIC FILMS**

(71) Applicant: Feng Tay Enterprises Co., Ltd., Douliu City, Yunlin County 640 (TW)
(72) Inventor: HUNG, Chi-Yuan, 704 Tainan City (TW); LIN, Yih-Chen, 116 Taipei City (TW)
(74) Representative: Viering, Jentschura & Partner mbB Patent- und Rechtsanwälte

(57) **Abstract**

Method for forming a polyurethane foam (104) covered with thermoplastic films (101,102) is disclosed. The method includes utilizing a mold (100) including a first mold base (10) having a mold cavity (12), a second mold base (20) having a mold cavity (12), and a middle frame (30) positioned between the first mold base (10) and the second mold base (20). Wherein, a thermoplastic film (101) is positioned between the first mold base (10) and the middle frame (30), another thermoplastic film (102) is positioned between the second mold base (20) and the middle frame (30), and a polyurethane mixture (103) is positioned between the two thermoplastic films (101,102). By closing and heating the mold (100), the mixture of the polyurethane (103) reacts to form a shaped polyurethane foam combining with the two thermoplastic films (101,102). Then, the shaped polyurethane foam (104) covered with the thermoplastic films (101,102) can be taken out by opening the mold (100).

## Description

### BACKGROUND OF THE INVENTION

### 1. Technical Field

The present invention is related to a footwear manufacturing technology, and more particularly to a method for forming a polyurethane foam covered with thermoplastic films.

### 2. Description of Related Art

It is well known in the art that a polyurethane foam is usually utilized to make a midsole or an outsole of a shoe because of its flexibility and cushioning/shock-absorbing effect.

However, the application of the polyurethane foam is limited due to its poor resistance to hydrolysis, yellowing, and abrasion. To overcome the above issues, one known method is to lacquer the surface of the polyurethane foam after the foam-forming step so as to increase its resistance to hydrolysis, yellowing, and abrasion. However, the lacquer process is harmful to the worker health and is also damage to the environment.

To solve the problems mentioned above, in Taiwanese Patent no. TW 563624, titled "Structure with wear-resistant stereoscopic foamed objects", a method for covering a foam with a plastic film to increase its water-resistance and abrasion-resistance is disclosed. Similar technologies are also disclosed in Taiwanese Patent no. TW 583919, titled "TPU protective device", and in Taiwanese Patent no. TW397168, titled "Insoles and outsoles with thermoplastic side wall covering layer". However, according to the above patents, only part of the foam can be covered with the plastic film, and a comprehensive covering cannot be achieved due to the mold structure or the technology thereof. Whereby, the properties of resistance to hydrolysis, yellowing, and abrasion are decreased.

Besides, for the purpose of taking out the product from the mold conveniently, conventional methods include a step of spraying a releasing agent inside the mold to prevent the shaped material adhering thereto. However, in practice, some residues of the releasing agent may be left on the inner surface of the mold and affects the following process. Moreover, the spraying of the releasing agent and the following cleaning process thereof both multiply the manufacturing process.

### BRIEF SUMMARY OF THE INVENTION

In view of the above, the purpose of the present invention is to provide a method for forming a polyurethane foam covered with thermoplastic films. The method can cover the thermoplastic films around the polyurethane foam, and can increase product throughput by reducing the process time thereof.

The present invention provides a method for forming a polyurethane foam covered with thermoplastic films. The method utilizes a mold including a first mold base, a second mold base, and a middle frame. The first mold base includes a mold cavity. The second mold base includes a mold core. The middle frame is positioned between the first mold base and the second mold base, and includes a hollow part. The mold core passes through the hollow part. The method includes steps of positioning a first thermoplastic film between the first mold base and the middle frame; positioning a second thermoplastic film between the second mold base and the middle frame, wherein the first thermoplastic film attaches to an inner wall of the mold cavity, and the second thermoplastic film attaches to a surface of the mold core; positioning a polyurethane mixture on the first thermoplastic film which the polyurethane mixture is positioned in the mold cavity; closing and heating the mold to react the polyurethane mixture to form a shaped polyurethane foam combined with the first thermoplastic film and the second thermoplastic film; and opening the mold to take out the shaped polyurethane foam covered with thermoplastic films.

The advantage of the present invention is to provide a polyurethane foam with good properties of hydrolysis resistance, yellowing resistance, and abrasion resistance by covering two thermoplastic films around the polyurethane foam.

### BRIEF DESCRIPTION OF THE SEVERAL VIEWS OF THE DRAWINGS

The present invention will be best understood by referring to the following detailed description of some illustrative embodiments in conjunction with the accompanying drawings, in which:
FIG. 1 is a perspective exploded view of a mold used in a method of an embodiment according to the present invention;
FIG. 2 is sectional exploded view of the mold of FIG. 1;
FIG. 3 is a cross-sectional view of the mold in a close mode of FIG. 1;
FIG. 4 is a top view of the partial components of the mold of FIG. 1;
FIG. 5 is a cross-sectional view of the product formed by the method of the embodiment according to the present invention;
FIG. 6 is a flow chart of a method for forming the polyurethane foam covered with thermoplastic films according to the present invention;
FIG. 7 is a cross-sectional view of a second mold base including vents according to an embodiment of the present invention; and
FIG. 8 is a schematic view of a second mold base including nails according to another embodiment of the present invention.

### DETAILED DESCRIPTION OF THE INVENTION

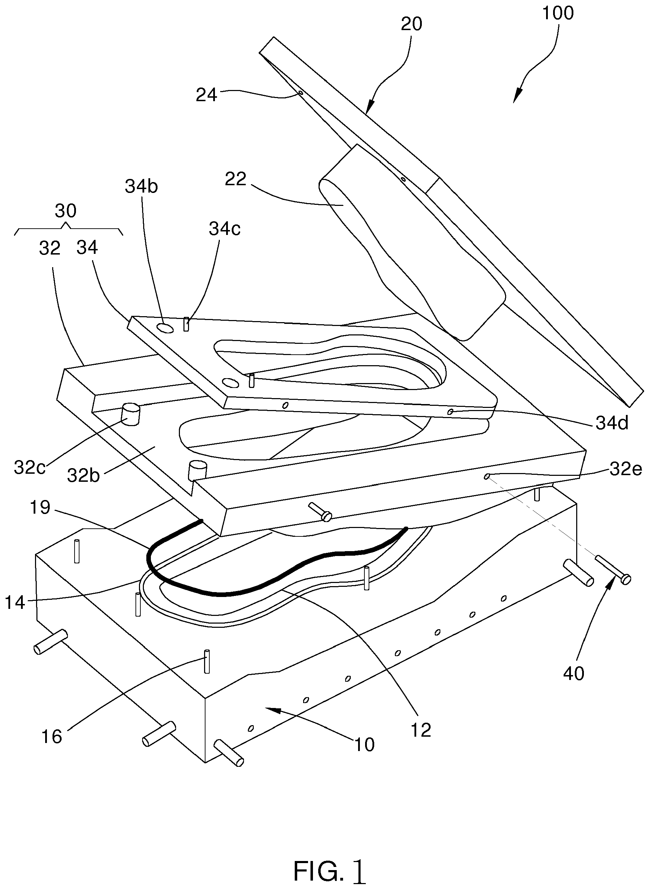

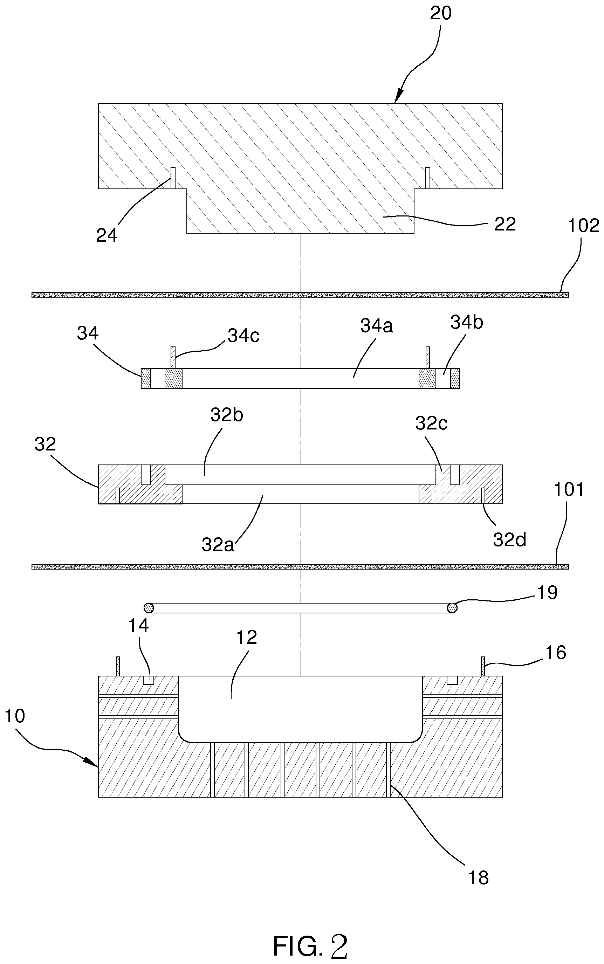

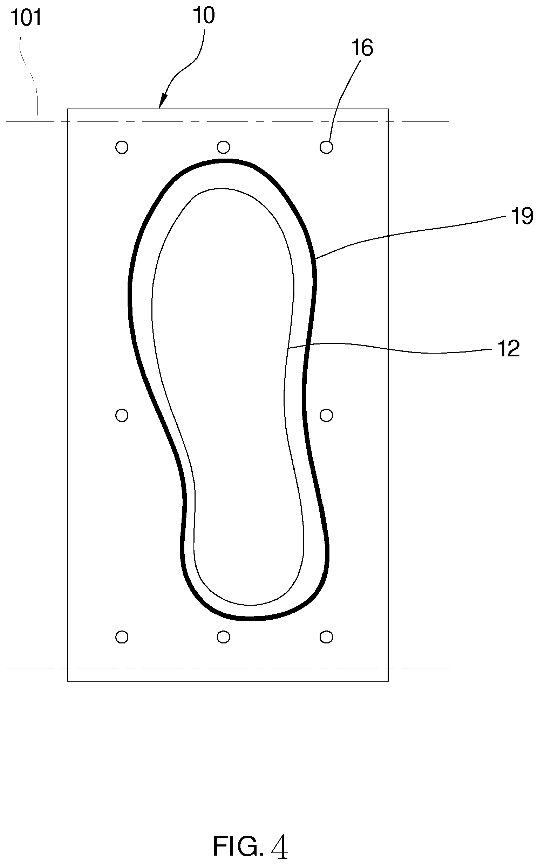

The following illustrative embodiments and drawings are provided to illustrate the disclosure of the present invention, these and other advantages and effects can be clearly understood by persons skilled in the art after reading the disclosure of this specification. As shown in FIG. 1 to FIG. 4, a mold 100 used in a method of an embodiment according to the present invention is shown in the figures. The mold 100 is adapted to cover two thermoplastic films around a polyurethane foam. The mold 100 includes a first mold base 10, a second mold base 20 and a middle frame 30. Wherein, the first mold base 10 includes a mold cavity 12 adapted for shaping; the second mold base 20 includes a protrusion defining a mold core 22 corresponding to the mold cavity 12; the middle frame 30 is positioned between the first mold base 10 and the second mold base 20, and includes a hollow part corresponding to the mold cavity 12; and the mold core 22 can pass through the hollow part.

The first mold base 10 includes a groove 14 around the mold cavity 12 on its top surface, and a plurality of first nails 16 are positioned around the groove 14. The first mold base 10 includes a plurality of first vents 18. Each of the first vents 18 includes one end communicating with the mold cavity 12, and another end communicating to the outside of the first mold 10. The first mold base 10 further includes a sealing element 19 which is formed of rubber and embedded into the groove 14. The second mold base 20 can be combined with the first mold base 10 in an open mode or a close mode. In the mold 100 used in this embodiment, the first mold base 10 and the second mold base 20 are pivotally connected with each other. The second mold base 20 includes a plurality of first plug holes 24 around the mold core 22.

In the mold 100 used in this embodiment, the middle frame 30 includes a first mold plate 32 and a second mold plate 34. The first mold plate 32 includes a first opening area 32a and the second mold plate 34 includes a second opening area 34a. The first opening area 32a and the second opening area 34a together constitute the hollow part mentioned above. Wherein, the top surface of the first mold plate 32 around the first opening area 32a includes a recess defining a socket 32b. Inside the socket 32b are formed with a plurality of positioning posts 32c. A plurality of second plug holes 32d are formed on the lower surface of the first mold plate 32 for inserting the first nails 16 of the first mold base 10.

The second mold plate 34 of the middle frame 30 includes a plurality of positioning holes 34b, and the top surface of the second mold plate 34 are formed with a plurality of second nails 34c. An area of the second mold plate 34 is smaller than that of the first mold plate 32, and a thickness of the second mold plate 34 is substantially equal to that of the socket 32b. Thus, the second mold plate 34 can be positioned in the socket 32b, and the top surface of the second mold plate 34 is substantially parallel to the top surface of the first mold plate 32. Meanwhile, the positioning posts 32c of the first mold plate 32 are inserted into the positioning holes 34b of the second mold plate 34 to fix the position of the second mold plate 34.The second nails 34c of the second mold plate 34 mentioned above can be inserted into the first plug holes 24 of the second mold base 20.

Besides, the present invention provides a fixing mechanism for securing the second mold plate 34, which is positioned in the socket 32b, to the first mold plate 32. In this embodiment, the fixing mechanism includes at least one bolt 40, at least one first through hole 32e formed on the first mold plate 32, and at least one second through hole 34d formed on the second mold plate 34. Preferably, the fixing mechanism includes plural bolts 40, plural first through holes 32e and plural second through holes 34d, wherein the number of the bolts 40, the first through holes 32e and the second through holes 34d are the same. The first through hole 32e is positioned horizontally with its two openings respectively communicating to the outside of the first mold plate 32 and the socket 32b. The second through hole 34d can be also positioned horizontally. The bolt 40 can be detachably inserted into the first through hole 32e and the second through hole 34d. Wherein, the second mold plate 34 cannot be detached from the first mold plate 32 when the bolt 40 is partially inserted into the first through hole 32e and partially inserted into the second through hole 34d. On the contrary, the second mold plate 34 can be detached from the first mold plate 32 when the bolt 40 is removed from the second through hole 34d.

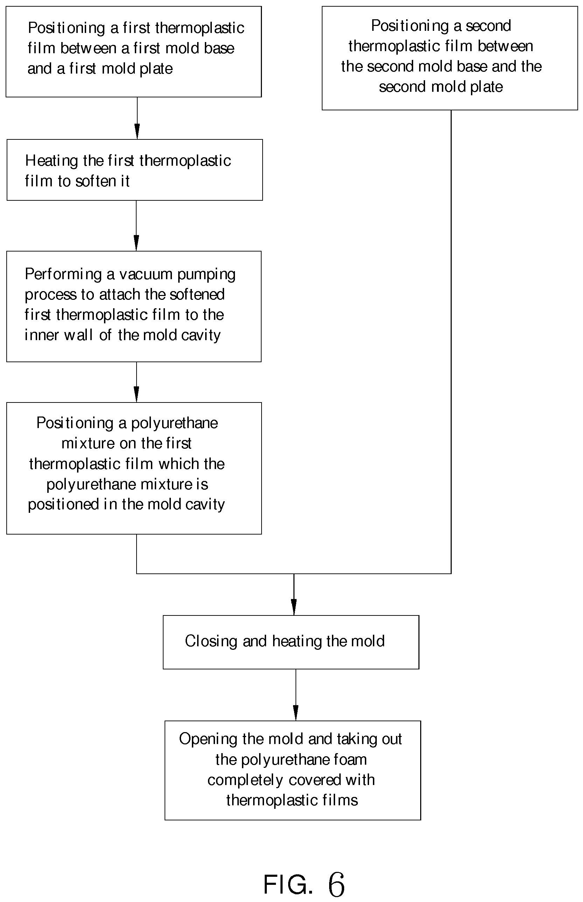

The above description are related to the components of the mold 100 and its corresponding positions which are used in this embodiment according to the present invention. As shown in FIG. 6, a method for covering a polyurethane foam with thermoplastic films by utilizing the same will be described as follows. Wherein, a thickness of the thermoplastic films is between 0.05mm and 0.3mm, and a material thereof is selected from the group consisting of polyurethane, polyurea, polyamide, polyester, polyvinyl alcohol, ethylene-vinyl alcohol copolymers, polyacrylamide, polyacrylate, and a combination thereof. In this embodiment, thermoplastic polyurethane (TPU) is utilized.

First, a first thermoplastic film 101 is positioned on the first mold base 10, and the first nails 16 penetrates through the first thermoplastic film 101. Then, the second plug holes 32d of the first mold plate 32 are aligned with the first nails 16 of the first mold base 10, and the first mold plate 32 can fit to the first mold base 10 by inserting the first nails 16 into the second plug holes 32d. Meanwhile, the first thermoplastic film 101 can be fixed between the first mold plate 32 and the first mold base 10 by the first mold plate 32 in a surface contact manner. The first thermoplastic film 101 is stretched to be positioned between the mold cavity 12 and the first opening area 32a, and the bottom surface of the first thermoplastic film 101 contacts with the sealing element 19.

A second thermoplastic film 102 is positioned between the second mold plate 34 and the second mold base 20. Then, by penetrating the second nails 34c through the second thermoplastic film 102 and inserting into the first plug holes 24, the second mold plate 34 fits to the second mold base 20. The second thermoplastic film 102 is also fixed between the second mold plate 34 and the second mold base 20 by the second mold plate 34 in a surface contact manner. Due to the flexibility and the stretching property of the second thermoplastic film 102, the second thermoplastic film 102 can tightly attach to the surface of the mold core 22 of the second mold base 20 when the mold core 22 of the second mold base 20 passes through the second opening area 34a of the second mold plate 34 even though the second thermoplastic film 102 is fixed by the second nails 34c.

Next, the first thermoplastic film 101 positioned between the first mold base 10 and the first mold plate 32 is softened by heating. Then, by vacuum-pumping, the first thermoplastic film 101 can be attached to the inner wall of the mold cavity 12. In this embodiment, the first thermoplastic film 101 is heated by an outside heater. The aforementioned outside heater includes an infrared heater, a heat gun or an electric heating element, but it is not limited thereto. The purpose is to pre-heat and soften the first thermoplastic film 101. The vacuum-pumping process is performed after the pre-heating process. The vacuum-pumping process includes steps of connecting the first mold base 10 with a vacuum-pumping machine via a pipe (not shown), turning on the vacuum-pumping machine, and drawing out the air between the first thermoplastic film 101 and the inner wall of the mold cavity 12 through the first vents 18. Then, the first thermoplastic film 101 attaches to the inner wall of the mold cavity 12.

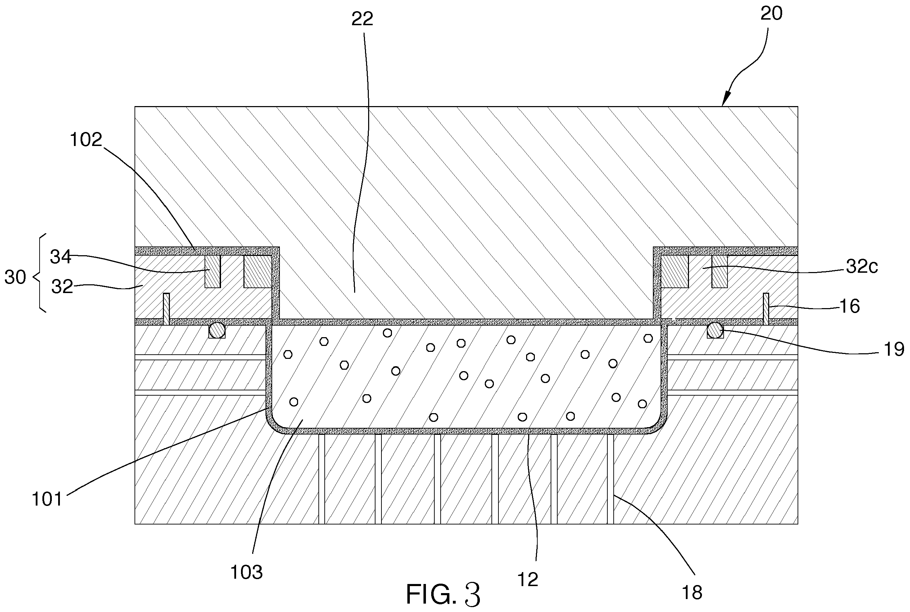

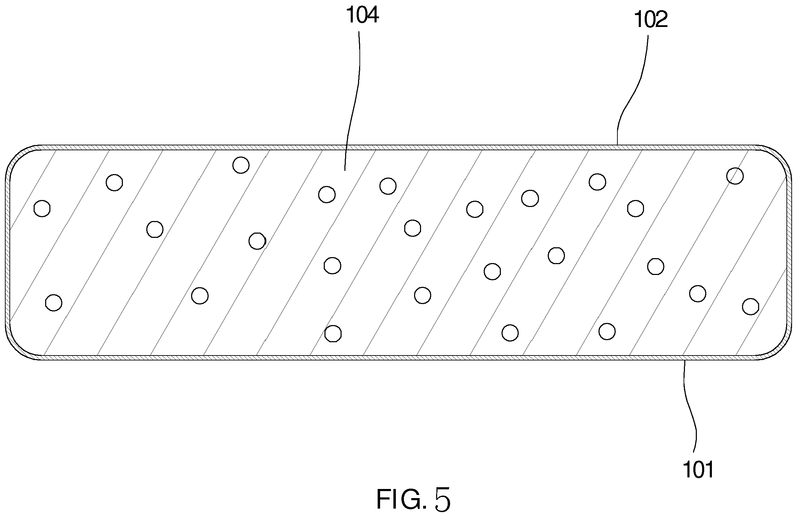

After the first thermoplastic film 101 attaching to the inner wall of the mold cavity 12, a polyurethane mixture 103 is positioned on the first thermoplastic film 101, and the polyurethane mixture 103 is positioned inside the mold cavity 12. Next, the mold 100 is closed (as shown in FIG. 3). The bolt 40 is inserted into the first through hole 32e and the second through hole 34d sequentially. Then, by heating the mold 100, the polyurethane mixture 103 positioned therein reacts to form a shaped polyurethane foam, and the shaped polyurethane foam simultaneously combines with the first thermoplastic film 101 and the second thermoplastic film 102 during the reaction process. Thereafter, the mold 100 is opened to make the second mold base 20 be opened corresponding to the first mold base 10. Since the second mold plate 34 is secured to the first mold plate 32 via the bolt 40, and the first mold plate 32 fits to the first mold base 10, the second thermoplastic film 102 will not adhere to the second mold base 20. Then, the shaped product, i.e., the shaped polyurethane foam whose surface is covered with thermoplastic films is taken out. As shown in FIG. 5, it is cross-sectional view of the shaped product. It is shown in the figure that an upper surface, a lower surface and side surfaces of the polyurethane foam 104 are completely covered by the first thermoplastic film 101 and the second thermoplastic film 102.

The benefits of the mold 100 used in this embodiment and its related forming method are summarized as follows:
1. Due to the design of the mold 100, the polyurethane foam 104 can be completely covered by the thermoplastic films 101 and 102. The covered polyurethane foam 104 could include good properties of hydrolysis resistance, yellowing resistance and abrasion resistance. When the shaped polyurethane foam is used as a midsole or an outsole of a shoe product, the above benefits could make the shoe product more competitive.
2. By respectively attaching the thermoplastic films 101 and 102 to the inner wall of the mold cavity 12 and the surface of the mold core 22, it is convenient to take out the polyurethane foam 104 whose surface covered with the thermoplastic films after the process. It is unnecessary to spray a releasing agent on the surface of the mold. Also, a step of cleaning the releasing agent can be omitted. Whereby, the process time could be reduced, and the throughput thereof could be increased.
3. The forming method of the present invention could reduce the damage to the health of workers and the environment.

In the above embodiment, since the sealing element 19 provides a sealed attachment to the first thermoplastic film 101 in the vacuum-pumping process, the vacuum-pumping effect is enhanced. However, when the thermoplastic film includes a predetermined thickness to make its upper and lower surfaces be tightly attached to the top surface of the first mold base 10 and the lower surface of the first mold plate 32 respectively, the sealing element 19 can be omitted. Meanwhile, the groove 14 formed on the first mold base 10 can also be omitted.

In addition, according to the present invention, the inner wall of the mold cavity 12 can be selectively formed with concave-convex patterns to increase a decoration of the finished product. One kind or plural kinds of patterns can be formed on a specific part of the inner wall depending on the requirement. Whereby, the outer surface of the thermoplastic films can be made to form corresponding patterns. In another embodiment, an inner surface of at least one of the first thermoplastic film and the second thermoplastic film is provided with a printed layer, and the printed layer is formed between the polyurethane foam and the thermoplastic film.

In the above embodiment, the middle frame 30 of the mold 100 is constituted by the first mold plate 32 and the second mold plate 34. Wherein, the first mold plate 32 and the second mold plate 34 are respectively used to fix each of the two thermoplastic films to the first mold base 10 and the second mold base 20. That is, one thermoplastic films is disposed between the first mold plate 32 and the first mold base 10, and the other thermoplastic films is disposed between the second mold plate 34 and the second mold base 20. However, for the purpose of fixing the two thermoplastic films, it is not necessary to have the first mold plate 32 and the second mold plate 34 at the same time. In other words, as long as the first thermoplastic film 101, which has to be heated and softened, can be disposed between the first mold base 10 and the middle frame 30, and the second thermoplastic film 102 can be fixed to the second mold base, the mold can be equipped with the first mold base, the second mold base, and a single-piece middle frame.

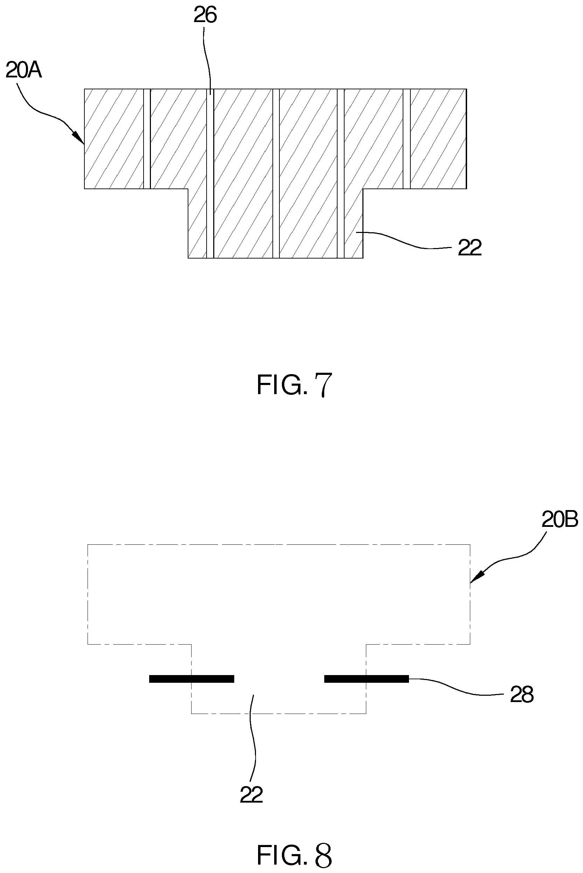

As shown in FIG. 7 and FIG. 8, the aspects of fixing the second thermoplastic film 102 to the second mold base are illustrated. Wherein, the second mold base 20A shown in FIG. 7 are formed with plural second vents 26. Each of the second vents 26 includes one end communicating with the outer surface of the mold core 22, and the other end communicating to the outside of the second mold base 20A. Similarly, the second mold base 20A is connected to a vacuum-pumping machine (not shown) via pipes, and the air therein can be drawn out through the second vents 26 by activating the vacuum-pumping machine. Besides, the second mold base 20B shown in FIG. 8 includes plural nails 28. Each of the nails 28 includes one end positioned inside the second mold base 20B, and the other end protruded from the surface of the mold core 22 and penetrates the second thermoplastic film 102. Wherein, the nails 28 can be formed to fix to the second mold base 20B, or can be formed with a moveable design such that the nails 28 are movably positioned inside the mold core 22.

## Claims

1. A method for forming a polyurethane foam (104) covered with thermoplastic films (101, 102), wherein the method uses a mold (100) comprising a first mold base (10), a second mold base (20) and a middle frame (30); the first mold base (10) comprises a mold cavity (12); the second mold base (20) comprises a mold core (22); the middle frame (30) is positioned between the first mold base (10) and the second mold base (20), and comprises a hollow part; the mold core (22) passes through the hollow part; the method comprises steps of:
positioning a first thermoplastic film (101) between the first mold base (10) and the middle frame (30), and positioning a second thermoplastic film (102) between the second mold base (20) and the middle frame (30), wherein the first thermoplastic film (101) attaches to an inner wall of the mold cavity (12), and the second thermoplastic film (102) attaches to a surface of the mold core (22);
positioning a polyurethane mixture (103) on the first thermoplastic film (101), the polyurethane mixture (103) being positioned in the mold cavity (12);
closing and heating the mold (100) to react the polyurethane mixture (103) to form a shaped polyurethane foam combined with the first thermoplastic film (101) and the second thermoplastic film (102); and
opening the mold (100) to take out the shaped polyurethane foam (104) covered with thermoplastic films (101, 102).

2. The method of claim 1, wherein the middle frame (30) comprises a first mold plate (32) and a second mold plate (34); the first mold plate (32) comprises a first opening area (32a), and the second mold plate (34) comprises a second opening area (34a); wherein the first opening area (32a) and the second opening area (34a) constitute the hollow part; the first thermoplastic film (101) is positioned between the first mold plate (32) and the first mold base (10); and the second thermoplastic film (102) is positioned between the second mold plate (34) and the second mold base (20).

3. The method of claim 2, further comprising a step of heating the first thermoplastic film (101) positioned between the first mold base (10) and the first mold plate (32) to soften the first thermoplastic film (101), and then performing a vacuum-pumping process to attach the first thermoplastic film (101) to the inner wall of the mold cavity (12).

4. The method of claim 3, wherein the step of heating the first thermoplastic film (101) positioned between the first mold base (10) and the first mold plate (32) to soften the first thermoplastic film (101) comprises utilizing an outside heater.

5. The method of claim 3, wherein the step of vacuum-pumping process comprises forming plural first vents (18) on the first mold base (10) and drawing out the air between the first thermoplastic film (101) and the inner wall of the mold cavity (12) through the first vents (18).

6. The method of claim 2, wherein the first thermoplastic film (101) is fixed between the first mold plate (32) and the first mold base (10) by the first mold plate (32) in a surface contact manner, and the first thermoplastic film (101) is positioned between the mold cavity (12) and the first opening area (32a) of the first mold plate (32).

7. The method of claim 2, further comprising a fixing mechanism adapted to fix the first mold plate (32) and the second mold plate (34) when the mold (100) is open, wherein the first mold plate (32) fits to the first mold base (10).

8. The method of claim 7, wherein a top surface around the first opening area (32a) of the first mold plate (32) comprises a recess defining a socket (32b); the second mold plate (34) is positioned within the socket (32b); the fixing mechanism comprises at least one bolt (40), at least one first through hole (32e) formed on the first mold plate (32), and at least one second through hole (34d) formed on the second mold plate (34); and the bolt (40) is detachably inserted in the at least one first through hole (32e) and the at least one second through hole (34d).

9. The method of claim 1, wherein the second mold base (20) comprises a plurality of second vents; one end of each of the second vents communicates to the outer surface of the mold core (22), and the other end of each of the second vents communicates to the outside of the second mold base (20).

10. The method of claim 1, wherein the mold (100) further comprises a plurality of nails (28); one end of each of the nails (28) is positioned in the second mold base (20); and the other end of each of the nails (28) is protruded from the surface of the mold core (22) and penetrates the second thermoplastic film (102) positioned between the second mold base (20) and the middle frame (30).

11. The method of claim 1, wherein a surface of at least one of the first thermoplastic film (101) and the second thermoplastic film (102) is provided with a printed layer, and the printed layer is formed between the foam and the at least one of the first thermoplastic film (101) and the second thermoplastic film (102).

12. The method of claim 1, wherein at least one part of the inner wall of the mold cavity (12) is provided with at least one pattern.

13. The method of claim 2, wherein the first thermoplastic film (101) and the second thermoplastic film (102) comprise a material selected from the group consisting of polyurethane, polyurea, polyamide, polyester, polyvinyl alcohol, ethylene-vinyl alcohol copolymers, polyacrylamide, polyacrylate and a combination thereof.

14. The method of claim 13, wherein a thickness of the first thermoplastic film (101) and the second thermoplastic film (102) is between 0.05mm and 0.3mm.
